# EUROPEAN PATENT SPECIFICATION

(11) **EP 1 584 171 B1**
(45) Date of publication and mention of the grant of the patent: **17.01.2007**
(21) Application number: 03778690.2
(22) Date of filing: 19.12.2003
(51) Int. Cl.: H04L 29/06

(54) **MULTI-FACTOR APPLICATION SELECTION**
ANWENDUNGSAUSWAHL UNTER BERÜCKSICHTIGUNG MEHRERER FAKTOREN
SELECTION D'APPLICATION SUR LA BASE DE MULTIPLES FACTEURS

(30) Priority: 06.01.2003 US 438134 P
(43) Date of publication of application: 12.10.2005
(73) Proprietor: Koninklijke Philips Electronics N.V., 5621 BA Eindhoven (NL)
(72) Inventor: BAUMEISTER, Markus, NL-5600 AE Eindhoven (NL); SIMONS, David, P., NL-5600 AE Eindhoven (NL); VERBERKT, Mark, H., NL-5600 AE Eindhoven (NL); VRIELINK, Koen, H., NL-5600 AE Eindhoven (NL)
(74) Representative: Groenendaal, Antonius W. M.
(86) International application number: PCT/IB2003/006234
(87) International publication number: WO 2004/062227

(56) References cited:
- WO-A-01/69933
- WO-A-02/13463
- US-A1- 2002 022 453
- US-A1- 2002 156 900

## Description

The invention relates to application selection in a networked consumer environment. It finds particular application based on multiple factors associated with a desired content to be communicated with and/or rendered, a desired location for interacting with the content, and certain capabilities and conditions of applications and consumer electronic (CE) devices in the network and will be described with particular reference thereto. However, it is to be appreciated that the invention is also amenable to other applications.

Numerous advances have been made in CE devices, such as receiving, recording and content rendering devices for audio, video, and multimedia content. At the same time, communication technologies have also been advancing at a rapid rate. For example, digital streaming technology has provided users with the ability to obtain audio, video, and multimedia content via computer networks, such as the Internet. Significant advances are also occurring in other communication technology areas such as, e.g., home networking and automation, Internet access, and mobile wireless data services and devices.

Home environments contain a large variety of digital devices. For example, a home environment may include digital televisions (TVs), mobile phones, personal digital assistants (PDAs), satellite receivers, cable TV receivers, terrestrial antennas, DVD players, digital video recorders, etc. Furthermore, these devices may be interconnected in a "home network" by one or more home networking technologies.

The expression "home network" generally refers to a collection of interconnected apparatus in and around the home. An apparatus on the network can communicate with one or more of the other apparatus so as to provide distributed functionalities and synergy through interoperability, typically under control of software applications and macros. The network provides functionalities such as entertainment and education (e.g., audio and video play-out, electronic program guides (EPGs)), control (e.g., thermostat, lights, sprinkler, kitchen appliances) and monitoring (e.g., security system, baby monitor). A variety of software architectures may be implemented in a home network. Examples thereof include HAVi, Home API, UPnP, Jini, HomeRF, HomePNA, etc.

Several examples of a home network are discussed in PCT Published Patent Application WO 02/13463 A3. Devices within a locale, such as a home, are controlled by detecting the presence of an identified user within different areas of the locale. The devices within the areas are controlled in response to each identified user's preferences. The locating and control devices may be stand-alone devices, or integrated within other electronic devices, such as TVs, stereos, computers, and so on. Also provided in this example of a home network are user task modules that suggest control actions based on the location of the user, the current context, and a profile of the user based upon the user's prior actions. The determination of each user's location is facilitated by the use of a tracker module that the user carries about or other tracking devices. The user may determine the degree of automation to be applied at any time.

The rendering capabilities of different CE devices often differs. For instance, a digital TV may be capable of decoding high-resolution content streams, e.g., DVB MPEG-2 streams, while mobile phones may only be able to decode low-resolution content streams, e.g., MPEG-4 movies transmitted via UMTS. In addition to heterogeneity in content rendering capabilities, the home networking capabilities of CE devices may also differ. For example, a TV may be equipped with a high bit rate IEEE 1394 interface, a PDA may be equipped with a moderate bit rate IEEE 802.11b wireless interface, and a mobile phone may be equipped with a low bit rate Bluetooth interface.

In this heterogeneous environment, a user should be able to access as much of the content available to the home on as many CE devices as possible. The content available from various service provider networks may include cable TV, satellite TV, wire and wireless telephone, and radio and TV broadcast. Content may also be available from some various storage devices in the home (e.g., DVD players, video and audio recorders, CD players, a home archive (i.e., DVHS or other hard disk recorders, etc.)). The same content is often available in different formats or via different service provider networks.

Furthermore, the fact that CE devices in the home are interconnected enables a content provider to provide services to various devices, thus increasing the viewing time of the content provider's content. One way in which this can be achieved is by offering content in different formats. The various formats may be transported via different networks. This enables the same content to be rendered on different CE devices even though each device requires a particular format, a particular network interface, or both. Several examples of different formats over different networks include radio, TV, and the Internet. A content provider could, for example, broadcast a specific sports event via DVB-MPEG2, via UMTS-MPEG4, and via radio (e.g., FM/DAB). This enables a consumer to follow the event using his home cinema, mobile phone, or portable radio.

Multiple streams or files of data that, from a consumer's point of view, are related or very similar are referred to as -- "equivalent content" -- even though the streams or data are technically very different. Different types of content equivalencies may be distinguished as follows: 1) content that is exactly the same with different encoding characteristics (e.g., encoding scheme, bandwidth etc.); 2) content that is the same, but, for example, the language or commentator are different; 3) the event from which the content originates is equal (e.g., a specific football match), but content is provided via different types of media (e.g., one is broadcast video media, while another is cable audio media). Note that these types of "equivalent content" streams are not required to arrive bundled in some access point in any way, nor are they required to come from the same service provider.

Future CE networks in consumer environments will have a variety of devices and access to various content instances all with different quality and availability. This requires more sophisticated application selection mechanisms than are presently available to simplify the application selection process. This will allow users to concentrate on selection of a desired content and a desired location in which to listen to and/or watch the content. Current application selection mechanisms only use content type-based application selection and then allow the user to influence which application is actually started. Other parameters associated with the selected content and/or the capabilities and conditions of the network are ignored.

For example, current desktop systems (e.g., Windows, KDE, Mac OS, etc.) determine applications that can be used for a given piece of content (i.e. normally a file) solely based on the type of the content. Windows uses the filename extension to determine the content type; whereas, KDE and MacOs take further information into account (e.g. the 'magic' starting bytes of the file). However, no other criteria are used.

With more and more types of CE devices available via networks and multiple users often sharing the same devices/resources, a sophisticated application selection mechanism is needed to select an application to communicate and/or render user-selected content in a user-selected location, while also taking into account potential hindrances associated with available options. There is, therefore, a need for an apparatus and method for application selection based on a desired content and a desired location using multiple factors associated with the content and capabilities and conditions of the network.

In one embodiment, an apparatus for selecting an application to deliver content in a networked consumer environment based on multiple factors is provided. The apparatus includes a means for receiving an initial content selection, a means for i) accessing a list of registered applications for delivering content in the consumer environment and ii) accessing information identifying one or more types of content supported by each registered application in the list of registered applications, and a means for i) identifying zero or more equivalent content references associated with the initial content selection, the combination of the initial content selection and the equivalent content references forming a list of selected content, ii) determining if any registered applications in the list of registered applications support any content types associated with the list of selected content, and iii) identifying each registered application in the list of registered applications that supports any of the content types associated with the list of selected content as a compatible application.

In another embodiment, a method for selecting an application to deliver content in a networked consumer environment based on multiple factors is provided. An initial selection of content is received. Then, zero or more equivalent content references associated with the initial content selection are identified. The combination of the initial content selection and the equivalent content references form a list of selected content. A list of registered applications for delivering content in the consumer environment is accessed. Information identifying one or more types of content supported by each registered application in the list of registered applications is accessed. Then, it is determined if any registered applications in the list of registered applications support any content types associated with the list of selected content. Each registered application in the list of registered applications that supports any of the content types associated with the list of selected content is identified as a compatible application.

In still another embodiment, the method also includes receiving an initial location selection within the consumer environment to which the content is to be delivered. Information identifying the user interface requirements associated with each compatible application is accessed. A list of sink resources for delivering content in the consumer environment is also accessed. As well as one or more graphs for each compatible application. Each graph identifies sink resource requirements associated with the corresponding compatible application. It is determined if any sink resource in the initially selected location supports the user interface requirements and the sink resource requirements of any of the compatible applications. In this embodiment, each compatible application having sink resource requirements that are satisfied by one or more sink resources in the initially selected location is identified as a selected application.

In yet another embodiment, the method of the first embodiment also includes accessing a list of sources of content associated with the consumer environment. Each source that provides any of the selected content is identified. One or more graphs for each compatible application, each graph identifying source resource requirements associated with the corresponding compatible application are accessed. It is determined if any source associated with any of the selected content supports the source resource requirements of any of the compatible applications. In this embodiment, each compatible application having source resource requirements that are satisfied by any source associated with the selected content is identified as a selected application.

In yet still another embodiment, the method of the first embodiment also includes accessing information associated with user preferences for each compatible application. Information associated with previous executions of each compatible application is also accessed. As well as one or more graphs for each compatible application, each graph identifying resource requirements associated with the corresponding compatible application. A qualitative rating for each graph is determined based on at least one of the user preference information, the previous executions information, and information associated with a graph preference by the corresponding compatible application.

In another embodiment, the method of the first embodiment also includes accessing information associated with the allocated state of resources within the consumer environment. One or more graphs for each compatible application, each graph identifying resource requirements associated with the corresponding compatible application are also accessed. It is determined if any available resource supports any of the resource requirements of any of the compatible applications. In this embodiment, each compatible application having resource requirements that are satisfied by one or more resources within the consumer environment is identified as a selected application.

In still more embodiments, any combination of the previously described methods forms an additional embodiment.

One advantage of the invention is a content instance having lowest cost can be selected from equivalent contents and rendered to a given content rendering device in a networked consumer environment.

Still another advantage is, in multi-device clusters, the best possible sink will be chosen/proposed automatically; taking into account how much screen space is actually available.

Yet another advantage is an application is selected that is best capable of taking advantage of special features of a source (or can best handle its disfeatures).

Still yet another advantage is application selection is adapted to typical user selection over time.

Another advantage is no application is started that would over exhaust the available resources, even if that application could in principle provide better quality than the application selected in its stead.

Other advantages will become apparent to those of ordinary skill in the art upon reading and understanding the following detailed description.

The drawings are for purposes of illustrating exemplary embodiments of the invention and are not to be construed as limiting the invention to such embodiments. It is understood that the invention may take form in various components and arrangement of components and in various steps and arrangement of steps beyond those provided in the drawings and associated description. Within the drawings, like reference numerals denote like elements.

FIG. 1 is a block diagram of an embodiment of a communication environment incorporating the invention.

FIGs. 2A-2E are flowcharts showing various embodiments of a method for application selection in a consumer environment network using multiple factors associated with desired content, desired location, and capabilities and conditions of the network.

FIG. 3 is a flowchart showing another embodiment of a method for application selection using multiple factors.

FIG. 4 is a realized graph of end-to-end communication in the consumer environment when audio-visual (AV) content is desired after the application selected to provide the content is running.

FIG. 5 is a realized graph of end-to-end communication in the consumer environment when a video conference is desired after the application selected to conduct the conference is running.

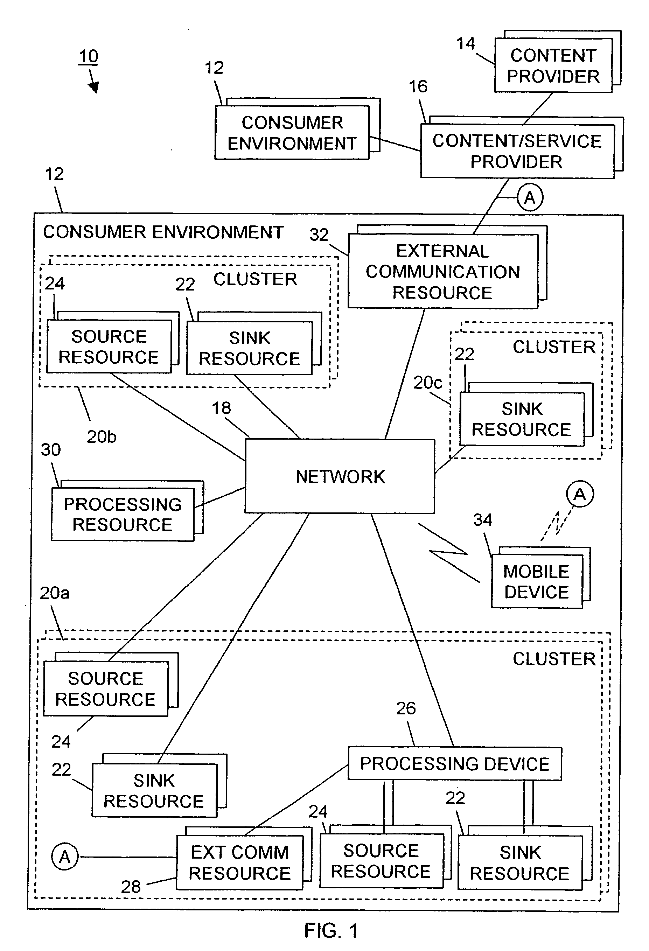

With reference to FIG. 1, a communication environment **10** includes one or more consumer environments **12,** one or more content providers **14,** and one or more content/service providers **16.** The communication environment **10** encompasses infrastructures for wired and wireless telephone communication, satellite communication, cable TV communication, terrestrial radio and TV broadcasts, and other communication networks capable of distributing content to consumers and communication between consumers. Typically, a consumer environment **12** is a home or apartment, a vehicle, an office, or a business. An example of a business environment that may implement this invention is a business that sells audio, video, or multimedia devices to consumers. Another example is a business that makes audio, video, or multimedia content available to consumers via a network of such audio, video, or multimedia devices (e.g., a library or an Internet cafe).

The content/service providers **16** include broadcasters, Internet service providers (ISPs), local and long distance telephone companies, wireless telephone service providers, cable TV service providers, satellite TV service providers, and other types of service providers that offer audio, video, or multimedia content to consumers. Content/service providers **16** provide access to content from multiple content providers **18** and a path for communication between multiple consumer environments **12.** Content/service providers **16** may also provide content like a content provider **14.** Many content/service providers **16** offer subscription services to consumers. Alternatively, or in addition, content/service providers **16** may offer such specialty services as pay-for-access content, on-demand content, and downloads (e.g., movies, music, e-books). There are various business models for the various types of content/service providers **16** and competition often leads to various pricing schemes for the same type of service.

A given content provider **14** may provide equivalent content to one or more content/service providers **16** via the Internet, a wired interface, or a wireless interface. The interface between a content provider **14** and a content/service provider **16** can implement any communication protocol capable of transporting the desired content. The content provider **14** may communicate the same content via multiple types of communication protocols. Similarly, a given content/service provider **16** may provide equivalent content to the consumer environments **12** via the Internet, a wired interface, or a wireless interface. The interface between a content/service provider **16** and a consumer environment **12** can implement any communication protocol capable of transporting the desired content. The content/service provider **16** may communicate the same content via multiple types of communication protocols. In general terms, the transport methods for communication between consumer environments **12,** content providers **14,** and content/service providers **16** include cable, satellite, terrestrial, and wired or wireless telephone. This includes RF broadcast, satellite communication, cellular communication, wired, and fiber optic technologies.

The consumer environment **12** includes a network **18** and one or more clusters **20.** A cluster **20** is a group of consumer electronic (CE) devices associated with a particular location (e.g., a room or a portion of a room) within the consumer environment **12.** Certain CE devices within the one or more clusters **20** are in communication with each other via the network **18.** The network **18** may use any wired or wireless communication protocol (e.g., IEEE 1394, Ethernet, IEEE 802.11b, Bluetooth, etc.) capable of transporting content compatible with the surrounding networked devices. The network **18** may also be a hybrid combination of networks utilizing a combination of protocols and a combination of wired and wireless technologies (i.e., wired, fiber optic, low-level RF, IR).

Clusters **20** can include any type of CE device and can be arranged in various configurations. For purposes of this invention, a CE device is viewed in terms of its functionality. For example, a given CE device may include external communication, processing, source, or sink functions or any combination of these functions. A CE device is viewed as a resource for any and all functions that it provides to the consumer environment **12.** Therefore, this invention deals with external communication resources, processing resources, source resources, and sink resources. Any type of CE device that provides access to a content/service provider **16** via any infrastructure in the communication environment **10** (e.g., receivers, tuners, antennas, modems) contains an external communication resource. Any type of CE device that processes audio, video, or multimedia content (e.g., set-top boxes, decoders, transcoders, amplifiers, image processors, computers) contains a processing resource. Any type of CE device that stores or captures audio, video, or multimedia content (e.g., CD or DVD players, audio or video cassette players, disk drives, cameras, microphones, 2-way radios, telephones) contains a source resource. Any type of CE device that can present or render audio, video, or multimedia content to a consumer (e.g., displays, projectors, 3D projectors, speakers, radios, telephones, televisions (TVs), personal digital assistants (PDAs)) contains a sink resource.

Three examples of cluster configurations with various combinations of resources are shown. A first cluster **20a** includes one or more sink resources **22**, one or more source resources **24,** and a processing resource **26,** each in communication with the network **18.** The first cluster **20a** also includes one or more sink resources **22,** one or more source resources **24,** and one or more external communication resources **28,** each in communication with the processing resource **22.** Each external communication resource **28** is also in communication with one or more content/service providers **16.** In one respect, within the context of a given consumer environment **12,** an external communication resource **28** acts a source resource for content provided to the consumer environment **12** by content/service providers **16**.

As discussed above, a CE device can include any combination of one or more resources. For example, in the first cluster **20a,** the resources in communication with the processing resource **26** could be combined in a CE device to provide functionality that is available in certain configurations of computer systems. This computer system configuration may be characterized as a computer chassis (i.e., processing resource), a monitor and speakers (i.e., sink resources), a camera and a microphone (i.e., source resources) and a modem (i.e., external communication resource).

A second cluster **20b** includes one or more sink resources **22** and one or more source resources **24,** each in communication with the network **18.** A third cluster **20c** includes one or more sink resources **22,** each in communication with the network **18.** Note that the second and third clusters **20b, 20c** do not include processing resources **26** or external communication resources **28.** Therefore, these clusters rely on one or more centralized processing resources **30** and one or more centralized external communication resources **32**. The centralized processing resources **30** and centralized external communication resources **32** are shared resources that are not associated with any particular cluster. The centralized processing resources **30** and centralized external communication resources **32** provide the same functionality described above for the processing resource **26** and external communication resources **28** in the first cluster **20a.** Alternatively, the network **18** can be configured so that a processing resource **26** and/or an external communication resource **28** associated with a cluster is shared with one or more sink resources **22** and/or one or more source resources **24** in other clusters.

The consumer environment **12** may also include one or more mobile devices **34** (e.g., portable radios, portable CD or DVD players, portable TVs, PDAs and other types of portable computers). Mobile devices **34** are CE devices that include various combinations of communication, processing, source, and/or sink resources or functionality and are portable. As such, any mobile device provides standalone functionality to users and may be used outside the local consumer environment. For example, a portable TV can be used in an external environment, such as a vehicle or a park. Similarly, a PDA can be used in an external environment, such as an office. Each mobile device **34** is also a network resource within its local consumer environment and includes a local wireless interface (e.g., low-level RF, IR) to communicate with the network **18**. When a mobile device **34** is within communication range, it provides its resources or functionality to the network **18**.

At least one networked resource in the consumer environment **12** includes an application manager that provides multi-factor application selection. Preferably, each sink resource includes an application manager managing all applications that present content on that sink. A user interface function is associated with the application manager. This user interface function allows users to select desired content for communication and/or rendering and a desired location for communicating and/or rendering the content. Any user interface associated with multi-factor application selection includes a display (e.g., monitor, character readout, indicators) and an input component (e.g., keyboard, mouse or other type of pointing device, keypad or other type of switches/controls). Different devices can provide the user interface using different types of components and in different levels of sophistication. Typically, the display and input components are required by communication, processing, source, and/or sink resources of networked devices and reused in conjunction with the user interface function associated with multi-factor application selection.

If the application manager is only provided at one resource in the consumer environment **12,** a centralized control strategy is implemented for selection of applications. If the application manager is provided on multiple resources in the consumer environment **12,** either a master-slave control strategy or a synchronized control strategy may be implemented. Other control strategies are also possible. In any control strategy, the user interface function may be implemented using local and remote user interfaces. In other words, the application manager can be controlled using the local user interface of the resource on which the application manager resides or it can be controlled using a remote user interface of another networked resource within the consumer environment **12.** For the master-slave control strategy, any resource running the application manager can be designated master and, if necessary, the master status can be transferred. For the synchronized control strategy, information regarding content communication and rendering and the current status of various networked resources is communicated to each application manager to coordinate application selection across the consumer environment **12.**

The application manager selects an appropriate application for a content the user wants to communicate with and/or have presented. The application manager takes several factors into account to choose the "optimal" application to communicate and/or present the content to the user in the specific situation. These factors include: 1) content type, 2) capabilities of the intended sink, 3) availability of equivalent versions of the content and capabilities of the sources providing the equivalent versions, 4) user preferences from previous application selections, and 5) allocation and availability of resources and bandwidth. Applications will express their streaming requirements to the application manager in advance as a graph. A graph is a collection of (abstract) resource nodes (i.e., resource requirements) connected via edges. Graphs can have tags assigned that further specify the required functionality. A graph is realizable if an actual resource (i.e., functional resource in a specific device) having the required functionality can be assigned to each of the resource nodes and the required bandwidth between the nodes can be allocated. Therefore, a realizable graph is a graph with all resources available. Quantitative values for selection criterion may be used to pre-select the realizable graph with the highest overall rating. Multiple factors are used to ultimately determine which application to start.

The application selection process begins, for example, when a user in the consumer environment uses the user interface of a networked resource to express his or her desire to be presented some kind of content (e.g., he wants to watch a movie or to listen to a football match broadcast). The consumer environment must then find an application which can present the content to the user with the maximal possible quality. Since quality criteria might be different between users and user intentions differ from one moment to another, typically the application manager incorporates preferences that can be adjusted by users and/or allows user interaction during the application selection process.

An example of the application selection process based on available resources is where the user selects video content for rendering. The video content is available as an MPEG2 stream from the Internet or from a DVD so the content type is the same. The application to show the stream from the DVD is preferably the application that came with the DVD player (or any other application which can make use of the advanced features of a DVD player like switching different language soundtracks). The application to show the content from the Internet might contain special measures to improve picture quality, which normally suffers due to the higher compression in streams from the Internet. Depending on which source the application manager finally chooses, one of the applications is ultimately selected.

Another example of the application selection based on available resources is where the user selects a videoconference for communicating content to another consumer environment. A videoconference application might require at least 320 x 240 pixels of screen space to present all of the UI elements (e.g., local and remote camera views, control buttons) associated with the application. If the space required for all the UI elements is not available, at least the video for the remote camera view must be displayable and the UI must support some kind of tabbing widget.

Still another example of the application selection based on available resources is where the user selects another user as the content he or she wants to get presented (communication between the users). If there is no resource in the consumer environment with space available for any video from the cameras, the application manager should not suggest a videoconference. Rather, the application manager should select an audio conference or some type of text messaging.

An example of the application selection process based on the allocation status of available resources is where a son of the family selects a movie for rendering and one source of the movie requires a resource that is currently in use by another application. The highest quality version of the movie the son wants to watch is available from a DVD in the home storage, a lower quality one from the Internet. However, the DVD version of the movie is only available in a stream format that is not understood by the display where the son sits. Therefore, the DVD application requires processing of the stream by a transcoder. A transcoder is a device to convert a stream (i.e., audio and/or video) from one, for example, format, protocol, size, and/or resolution to another. However, all transcoders are currently in use. The application manager selects the Internet application and makes that version available to the son.

An example of the application selection process based on user preferences is where the parents prefer a well-known stable version of the DVD application, while the son normally prefers the newest version. As shown by the examples, the final selection of content, source resources, sink resources and application is mutually dependent.

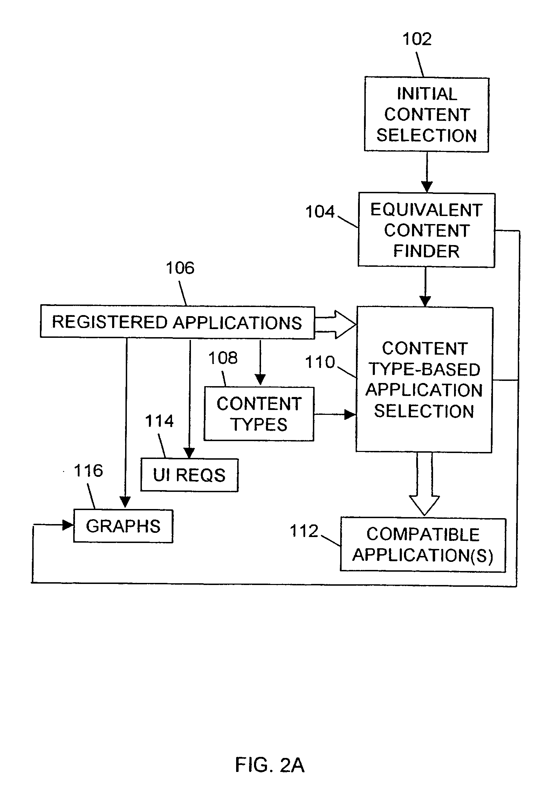

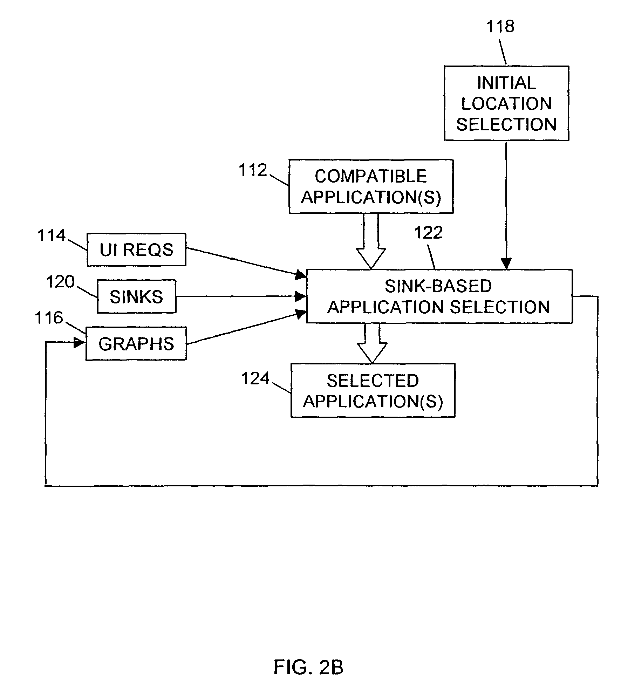

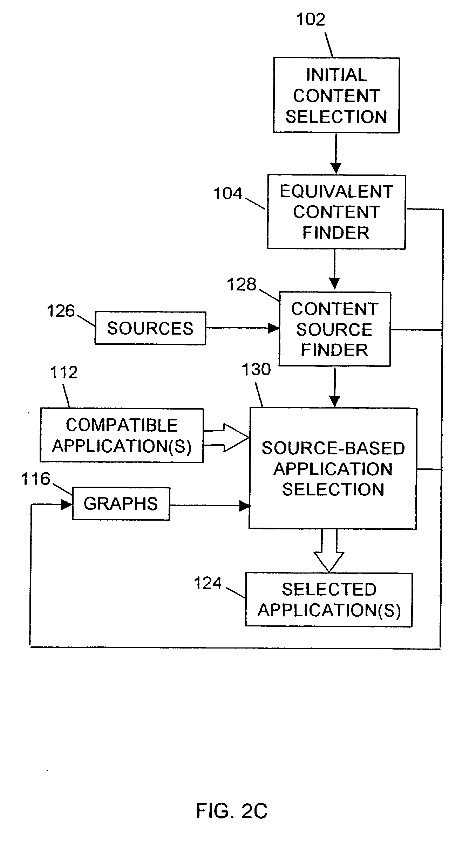

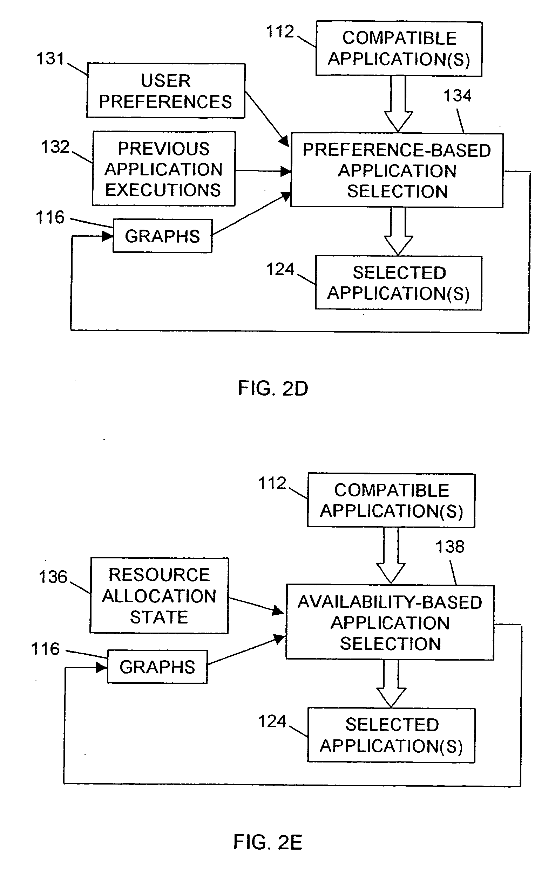

With reference to FIGs. 2A-2E five embodiments of a method for multi-factor application selection are provided. FIG. 2A provides an embodiment of the method that includes an equivalent content service with content type-based application selection. FIGs. 2A and 2B provide an embodiment of the multi-factor application selection method that combines content type-based application selection and sink-based application selection. FIGs. 2A and 2C provide an embodiment that combines content type-based application selection and source-based application selection while also including equivalent content and source finder services. FIGs. 2A and 2D provide another embodiment of the method. This embodiment combines content type-based application selection and preference-based application selection. In still another embodiment, FIGs. 2A and 2E provide a method that combines content type-based application selection and availability-based application selection.

In preparation for multi-factor application selection, each application associated with content communication and/or content rendering registers with the system. This forms a set of registered applications. As part of the registration process, each application specifies its required resources, UI requirements, and content types that it supports. This information is also consolidated in the form of resource graphs that reflect various paths for end-to-end communication that are supported by the registered application. Initially, these graphs contain placeholders or nodes, for example, for sink resources and locations and for content and content sources (i.e. the initial attributes at the nodes reflect the capabilities of the registered application). In certain embodiments, tracking processes are also associated with the application manager to maintain records of user preferences, previous uses of the registered applications, and current status and allocation of networked resources.

With further reference to FIG. 2A, one embodiment of a method for multi-factor application selection starts at a step **102** when a user initially selects content. Typically, the user will use an already running system application to specify this request. This "initiating application" will contact the application manager and pass it the requested content. Next, at a step **104,** the equivalent content finder checks for equivalent content. Calculation and provisioning of content equivalencies may be retrieved them some third party service. This may result in a list of content that is considered equivalent to the originally requested content (e.g. radio broadcast of a football game as alternative to a TV broadcast). A qualitative rating between 0 and 100% (i.e., 0.00. to 1.00) may be determined for each returned equivalent content as well as the initially selected content. The content with the highest quality establishes the baseline (i.e., 100% or 1.00) for the qualitative rating. The application manager may automatically limit further processing to the initially selected content and equivalent content that exceeds a certain threshold qualitative rating. Additionally, or alternatively, the application manager may allow user selection of one or more items for further processing from a list of the initially selected content and the returned equivalent content.

The content selected for further processing in the step **104** and the set of registered applications (step **106**), along with the content types supported by each registered application (step **108**) are provided for content type-based application selection process in a step **110.** Registered applications that do not support the content types associated with the returned equivalent content are filtered out in the step **110**. The content type-based application selection process typically comes up with several possible combinations of equivalent content and registered applications and identifies one or more compatible applications (step **112**). To avoid presenting a long list of compatible applications to the user and also to facilitate some automatic tasks (e.g. improving the application performance if new equivalent content or resources become available) a qualitative rating that indicates how much the user might appreciate the compatible applications may be associated with the result. The application manager may automatically select the compatible application with the highest qualitative rating. Alternatively, the application manager may allow user selection of an application from a list of the compatible applications. The application manager may automatically limit the list of compatible applications to applications that exceed a certain threshold qualitative rating.

As described above, information associated with each registered application also identifies UI requirements (step **114**) and graphs (step **116**) for the application. This information is available to the application manager and may be introduced in other embodiments of the method for multi-factor application selection. For these additional embodiments, the application manager includes a graph mapper process. The results of the equivalent content finder (step **104**) and the results of the content type-based application selection process (step **110**) may be provided to the graph mapper process to fill in the nodes of graphs for the compatible applications.

With further reference to FIGs. 2A and 2B, another embodiment of a method for multi-factor application selection starts at the step **102** and continues through FIG. 2A as described above. In this embodiment, the compatible applications identified in the step **112** are carried forward for further processing based on sink resources. At a step **118**, the user initially selects a location in the consumer environment in which he or she wants to interact with the content. Typically, the initial location selection occurs along with the initial content selection (step **102**) through the "initiating application." Like the initial content selection, the initial location selection is passed to the application manager by the "initiating application." The initial location is typically specified as a cluster of devices (e.g., the TV/high fidelity corner in the living room). Alternatively, the initial location can be a specific device (e.g., PDA). The compatible applications (step **112**), UI requirements associated with the compatible applications (step **114**), graphs associated with the compatible applications (step **116**), initial location selection (step **118**), and sink resources (step **120**) are provided for sink-based application selection in a step **122**.

If the initial location was a cluster of devices and not an individual sink resource, the application manager queries a resource registry for the cluster to retrieve the individual sink resources in the cluster. The capabilities of the sink resources are compared to the UI requirements of the compatible applications. UI requirements, for example, contain information about required screen space, widget types, and audio creation capabilities. Typically, applications require some way to display a UI to the user (i.e., displaying content is also some kind of UI). Applications should be programmed more or less independent of the type of resource used for the UI, but most applications will nevertheless have minimum requirements for the UI used to present or render the selected content. The application manager compares the UI capabilities of the sink resources to the UI requirements of the compatible applications.

Applications that are not compatible with sink resources in the selected location are filtered out in the step **122**. The sink-based application selection process typically comes up with several possible combinations of selected content, registered applications, and sink resources and identifies one or more selected applications (step **124**). If qualitative ratings are used in the application selection process, the application manager may automatically select the application with the highest qualitative rating. Alternatively, the application manager may allow user selection of an application from a list of the selected applications. The application manager may automatically limit the list of selected applications to applications that exceed a certain threshold qualitative rating. At this point, the results of the sink-based application selection process (step **122**) may be provided to the graph mapper process to fill in nodes of the graphs for the selected applications.

With further reference to FIGs. 2A and 2C, another embodiment of a method for multi-factor application selection starts at the step **102** and continues through FIG. 2A as described above. In this embodiment, the compatible applications identified in the step **112** are carried forward for further processing based on the source of selected content. Note that the initial content selection (step **102**) and the equivalent content finder (step **104**) described above for FIG. 2A also contribute to source-based application selection. The content selected for further processing in the step **104** and available sources of content (step **126**) are provided to a content source finder in a step **128**. Sources include source resources, addresses or identifiers associated with other consumer environments, and channels, sub-channels, addresses, or other types of identifies associated with content providers. Available sources include source resources currently on the network in the consumer environment and other consumer environments and content providers that are accessible via current subscriptions with service providers.

Applications may be source specific (e.g. prefer to work with DVD-players). Therefore some applications may restrict sources in their graph. Therefore the application manager must test for each application graph, if there exists a source of the required type/types providing the selected content. Applications may prefer specific kinds of sources even though the content types the application handles can come from other sources as well. An example is a special DVD-watching application that can use the DVD-player capabilities to switch languages or to show the bonus' tracks. A standard video watching application is probably not able to do this, but may be better for showing non-DVD video. The content source finder finds all sources that can provide the content selected for further processing. The content source finder returns a list of source s associated with the selected content for further processing.

The compatible applications (step **112**), graphs associated with the compatible applications (step **116**), and the resulting list of sources from the step **128** are provided for source-based application selection in a step **130**. Applications that specify a required source that does not provide the selected content are filtered out in the step **130**. The source-based application selection process typically comes up with several possible combinations of selected content, registered applications, and sources of the selected content and identifies one or more selected applications (step **124**).

If qualitative ratings are used in the application selection process, the application manager may automatically select the application with the highest qualitative rating. Alternatively, the application manager may allow user selection of an application from a list of the selected applications. The application manager may automatically limit the list of selected applications to applications that exceed a certain threshold qualitative rating. At this point, the results from the equivalent content finder (step **104**), the results from the content source finder (step **128**), and the results of the source-based application selection process (step **130**) may be provided to the graph mapper process to fill in nodes of the graphs for the selected applications.

With further reference to FIGs. 2A and 2D, another embodiment of a method for multi-factor application selection starts at the step **102** and continues through FIG. 2A as described above. In this embodiment, the compatible applications identified in the step **112** are carried forward for further processing based on preferences. The compatible applications (step **112**), graphs associated with the compatible applications (step **116**), user preferences associated with the compatible applications (step **131**), and previous uses or executions of the compatible applications (step **132**) are provided for preference-based application selection in a step **134**. In addition, the graph mapper process, through feedback from the preference-based application selection process (step **134**), may fill in qualitative ratings in the graphs (step **116**) so that the graphs may be ranked according to the user preferences.

The system itself maintains a database of usage preference for each application relative to content type and user. Registered applications that are preferred by the user for specific kinds of content are given a higher qualitative rating (e.g., typically based on usage frequency). If equivalent content from different sources varies in quality (e.g. broadband MPEG2 versus highly compressed MPEG4) this is also reflected in the qualitative ratings. Even if several applications are capable of presenting the same content, the user may prefer a specific application (e.g. because this application is the only one capable of editing the content).

Applications may specify preference percentages with graphs (i.e. qualitatively ranking its graphs based on which graph the application likes best) when registering with the system. These qualitative ratings may be taken into account by the preference-based application selection process to filter out graphs that are rated below a certain threshold qualitative rating when deciding which options to propose to the user.

The preference-based selection process **134** includes consideration of one or more of the following qualitative ratings: i) a content qualitative rating, ii) a UI qualitative rating, iii) an application qualitative rating, iv) a user qualitative rating, v) a graph qualitative rating, and vi) a graph mapper qualitative rating. The content qualitative rating is a number assigned by the equivalent content finder. The content qualitative rating represents the overall quality of the content (e.g., consideration of size, resolution, frame rate, etc.). The UI qualitative rating is a number assigned by a UI-shell associated with the application manager. The UI qualitative rating expresses which sink devices the UI shell would prefer based on, for example, remaining available screen space. The application qualitative rating is a number gathered over time by the application manager. The application qualitative rating expresses how often the user chose a particular application for this specific content type on previous occasions. The user qualitative rating: is a number specified explicitly by the user to express his or her preferences for a specific application (e.g., the cutting edge version vs. the trusted old version). The graph qualitative rating: is a number representing how appropriate a particular graph is for the application. Typically, the graph qualitative rating is specified by the application designer to give preference to "normal" graphs over "resources are low" graphs. The graph mapper qualitative rating represents how "easy" it would be to allocate/assign all the resources requested by the graph.

All of these qualitative ratings may be implemented or any combination thereof. Each qualitative rating that is implemented is used to determine an aggregate qualitative rating for each potential application. Typically, the implemented qualitative ratings are multiplied together for a given application to determine the aggregate qualitative rating of that application.

The compatible applications are ranked according to preferences in the step **122** and one or more selected applications are identified in a step **124.** The application manager may automatically select the application with the highest qualitative rating. Alternatively, the application manager may allow user selection of an application from a list of the selected applications. The application manager may automatically limit the list of selected applications to applications that exceed a certain threshold qualitative rating. At this point, the results of the preference-based application selection process (step **134**) may be provided to the graph mapper process to fill in nodes of the graphs for the selected applications. With further reference to FIGs. 2A and 2E, another embodiment of a method for multi-factor application selection starts at the step **102** and continues through FIG. 2A as described above. In this embodiment, the compatible applications identified in the step **112** are carried forward for further processing based on availability of resources in the consumer environment. The compatible applications (step **112**), graphs associated with the compatible applications (step **116**), and a current state and allocation of resources (step **136**) are provided for availability-based application selection in a step **138**.

Each registered application provided all its graphs to the application manager when the application was registered in the system. Now, the application manager tests these graphs for realizability (i.e., availability of resources) to find out which application can be used to present the content to the user. Testing for realizability is time consuming. Therefore, it is desirable to test as few graphs as possible. The application manager process, through feedback from equivalent content finder (step 104), the content type-based selection process (step **110**), and the availability-based application selection process (step **138**), and limits the graphs considered to those that are compatible with resources that are currently available for allocation. Therefore, based on the information selected so far, graphs are filtered out. For example, if no sink resource is usable for a particular graph, the graph is filtered out.

A complete description of the required resources (including streaming interconnections) is tested for availability given the current allocation status of the available resources. The execution of an application requires bandwidth and may require a specific resource (e.g. a tuner or a transcoder). This information is read from nodes of the application graphs and, if allocation of the required bandwidth or the required resources fails, the graph is filtered out. For example, if no resource is available for a particular graph or if the required space or capacity is not available in any resource for a particular graph, the graph is filtered out. If all of the graphs for a particular application are filtered out, the application cannot be started and it is also filtered out.

The availability of the (streaming) resources required for each graph is tested by the graph mapper process. The graph mapper receives the application graphs tagged with content and possible sinks and tests the availability of the sources for the content. Also, depending on the available and requested features of the content (i.e., size, frame rate, etc.), the graph mapper may need to include transcoders or other processing resources in the graph. The graph mapper may return a availability-quality rating which is a value indicating how much 'effort' this realization was (e.g. how many transcoders were introduced, is the network bandwidth becoming scarce).

For example, two graphs may exist for a given application, one graph using a satellite tuner as a source resource, the other using a cable tuner. If both tuners can serve two streams each and the satellite tuner already serves one stream, the graph using the cable tuner is given a higher rating assuming everything else is equal. Similarly, if the availability of a particular resource required by an application needs additional resources (e.g. transcoders) inserted or if it uses up a scarce resource (e.g. much bandwidth)) the application may be assigned a low qualitative rating. While, if another sink resource is already compatible with the content format delivered by an application, its allocation status will return a high qualitative rating.

The aggregation of various quality ratings results in one quality rating per graph and thereby also one for the usefulness of each application in the current situation. The quality ratings for applications are used to order possible application-content-location combinations to the user in an arrangement that emphasizes applications expected to be the most useful. But also the quality ratings for graphs can serve a useful purpose. Testing the availability of all required resources in a graph is a time consuming process. Also typically many possible graphs will exist for a content-location combination selected by the user. The graphs might be tested in a specific order by the graph mapper (e.g. based on the preference percentages returned by the previous steps). Testing of additional graphs may be stopped after a certain amount of time has elapsed or when the qualitative ratings for the remaining graphs are below a certain qualitative threshold. This is to ensure timely startup of an application, even if many alternative applications/graphs exist.

Applications that specify a required resource that is not available are filtered out in the step **138**. The availability-based application selection process typically comes up with several possible combinations of selected content, registered applications, and available resources and identifies one or more selected applications (step **124**). If qualitative ratings are used in the application selection process, the application manager may automatically select the application with the highest qualitative rating. Alternatively, the application manager may allow user selection of an application from a list of the selected applications. The application manager may automatically limit the list of selected applications to applications that exceed a certain threshold qualitative rating.

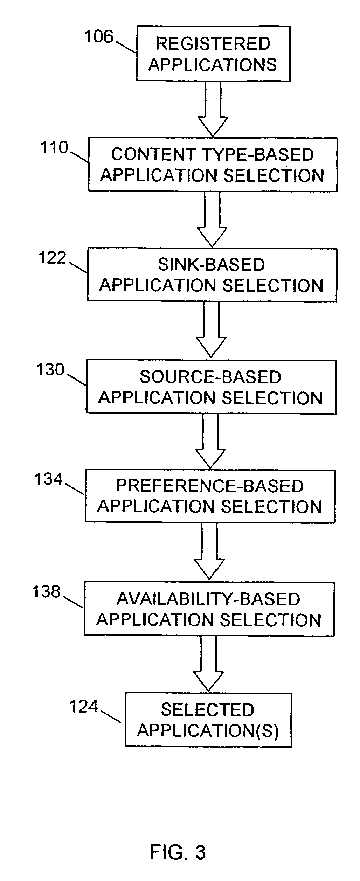

With reference to FIG. 3, another embodiment of a method for multi-factor application selection consolidates the several embodiments described above and shown in FIGs. 2A-2E. In the embodiment being described, a pipeline from the registered applications (step **106**) to the one or more selected applications (step **124**) is shown without repeating the detailed steps associated with each of the previously described embodiments. In the step **110,** initial content selection, equivalent content, and content type are factors that contribute to content type-based application selection. Applications that do not support the content types associated with the selected content are filtered out in the step **110.** Compatible applications are carried forward for further processing.

In the step **122,** UI requirements associated with the compatible applications, graphs associated with the compatible applications, initial location selection, and sink resources are factors that contribute to sink-based application selection. Applications that do not support sink resources in the selected location are filtered out in the step **122**. Compatible applications are carried forward for further processing.

In the step **130,** graphs associated with the compatible applications and sources for the selected content are factors that contribute to source-based application selection. Applications that require a source that cannot provide the selected content are filtered out in the step **130**. Compatible applications are carried forward for further processing.

In the step **134,** graphs associated with the compatible applications, user preferences associated with the compatible applications, and previous uses or executions of the compatible applications are factors that contribute to preference based application selection. Applications are ranked according to preferences and low-ranked applications may be filtered out in the step **134**. Compatible applications not filtered out are carried forward for further processing.

In the step **138,** graphs associated with the compatible applications and a current state and allocation of resources within the consumer environment are factors that contribute to availability-based application selection. Application that require resources that are not available are filtered out in the step **138**. One or more selected applications are ultimately identified in the step **124**. The application manager may automatically select the application with the highest qualitative rating. Alternatively, the application manager may allow user selection of an application from a list of the selected applications. The application manager may automatically limit the list of selected applications to applications that exceed a certain threshold qualitative rating.

For the embodiment being described, steps **110, 122, 130, 134,** and **138** can be performed in any order and in any combination. However, each arrangement has its advantages and disadvantages. For example, having the user select early from the available applications the one fitting his intentions would reduce the number of potential applications early on and therefore reduce the amount of necessary tests and speed up application startup. On the other hand, one wants to avoid proposing applications to the user that cannot be run if selected. Performing availability selection very late reduces the number of graphs to be tested and may even allow applications to influence their graphs before testing but restricts the degrees of freedom for the graph mapper process and might require testing graphs for applications that are not ultimately started.

When the user selects a content the task of the system is to find the set of applications which can be used for presenting the content in the current situation to the user with an ordering based on overall estimated quality of the resulting presentation. The selection process described above typically comes up with several combinations of selected content, sources for the selected content, sink resources in the selected location, and compatible applications. To avoid presenting a long list of compatible applications to the user and also to facilitate some automatic tasks (e.g. improving the application performance if new equivalent content or resources become available), qualitative ratings are introduced in one or more stages of the selection process. For example, the equivalent content finder assigns a percentage from 0 to 100 to all equivalent content it returns. The number associated with selected content represents some kind of quality rating for the equivalent content with respect to the initially selected content. The estimated preference of a user to select a given application is also returned as a value that indicates how probable the user will want to use the application with the selected content types. This value is typically adapted over time from user behavior.

As described above, the graph mapper process return a percentage between 0 and 100 to indicate how well it could get all required resourcesThe application manager process will also integrate the preference ratings for graphs specified by the applications during the registration process. Finally, all these qualitative ratings are multiplied together. Using the aggregated rating, the selected applications are ranked and either the highest rated application is started automatically or the user is given the choice out of most highest rated content-source-sink-application combinations.

This choice of the user will be enabled by the "initiating application" which receives the ordered (and possibly truncated) list of possible application-content-location triple combinations from the application manager. After the user has made this choice via the user interface of the "initiating application" (or if that application has decided on its own) it will name the selected triple combination to the application manager, which will then take care of starting the appropriate application as ordered. However, non-interactive initiating applications (e.g., timer-based auto starter) can circumvent this external selection by ordering the application manager to select among the possible applications on its own instead of passing an ordered list to the "initiating application." The application manager will then typically choose the application-content-location combination with the highest aggregated quality rating.

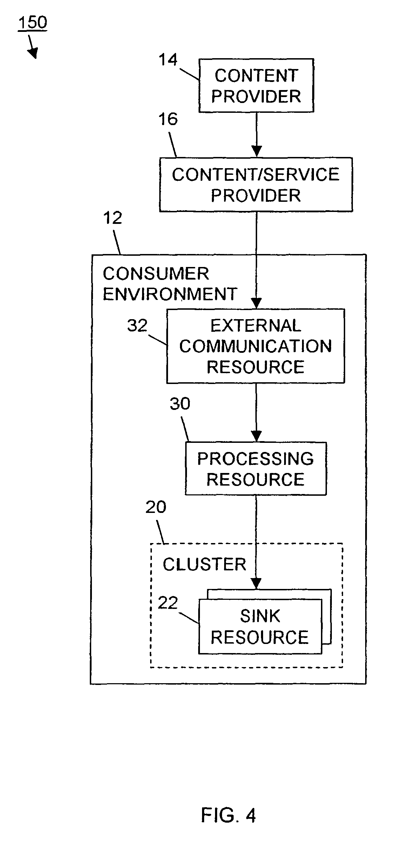

With reference to FIG. 4, an end-to-end communication path **150** shows a realized graph for viewing audio-video content, such as a movie. This is a simplified version of the realized graph for the application selected to deliver the content. The actual graph includes specific device identifiers (e.g., device type, address, location), specific source identifiers (e.g., channel, sub-channel, frequency), and performance parameters (e.g., resolution, screen size, frame rate, bandwidth). As shown, the source of the audio-video content is a content provider **14** via a content/service provider **16**. An external communication resource **32** in the consumer environment **12** receives the audio-video content. A processing resource **30** conditions the audio-video stream for two sink resources **22** (i.e., a video display and audio speakers) located in a particular cluster **20**.

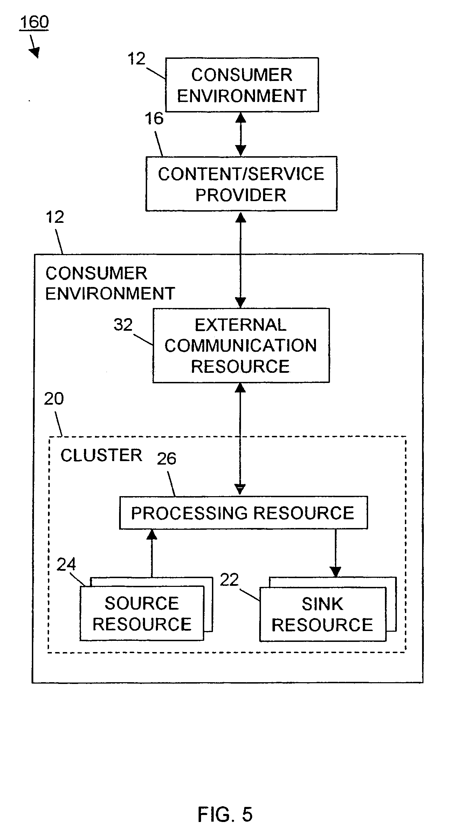

With reference to FIG. 5, another example of an end-to-end communication path **160** in the consumer environment **12** shows a simplified realized graph for a video conference. Here, the source of audio-video content is another consumer environment **12** via a content/service provider **16.** An external communication resource **32** in the consumer environment **12** receives the audio-video content and provides it to a particular cluster **20**. A processing resource **26** in the cluster **20** conditions audio-video streams from the external consumer environment **12** for two sink resources **22** (i.e., a video display and audio speakers). For example, the processing device **26** may be responsible for converting audio-video streams from/to H.323. Two source resources **24** (i.e., a camera and a microphone) provide audio-video content to the processing resource **26**. The processing resource **26** conditions the audio-video stream from the source resources **24** and audio-video content is communicated back to the external consumer environment **12** via the same path as that for receiving content.

## Claims

1. An apparatus for selecting an application to deliver content in a networked consumer environment based on multiple factors, comprising:
a means (22, 24, 34) for receiving an initial content selection;
a means (18) for i) accessing a list of registered applications for delivering content in the consumer environment, **characterized in that** the means (18) are further for ii) accessing information identifying one or more types of content supported by each registered application in the list of registered applications; and
a means (26, 30) for i) determining if any registered applications in the list of registered applications support any content types associated with the selected content, and ii) identifying each registered application in the list of registered applications that supports any of the content types associated with the selected content as a compatible application.

2. The apparatus as set forth in claim 1, the determining and identifying means (26, 30) further including:
a means (26, 30) for identifying zero or more equivalent content references associated with the initial content selection, the combination of the initial content selection and the equivalent content references forming a list of selected content.

3. The apparatus as set forth in claim 1, further including:
a means (22, 24, 34) for receiving an initial location selection within the consumer environment to which the content is to be delivered;
a means for accessing information identifying the user interface requirements associated with each compatible application;
a means (18) for i) accessing a list of sink resources for delivering content in the consumer environment and ii) accessing one or more graphs for each compatible application, each graph identifying sink resource requirements associated with the corresponding compatible application; and
a means (26, 30) for i) determining if any sink resource in the initially selected location supports the user interface requirements and the sink resource requirements of any of the compatible applications and ii) identifying each compatible application having sink resource requirements that are satisfied by one or more sink resources in the initially selected location as a selected application.

4. The apparatus as set forth in claim 1, further including:
a means (18) for i) accessing a list of sources of content associated with the consumer environment and ii) accessing one or more graphs for each compatible application, each graph identifying source resource requirements associated with the corresponding compatible application; and
a means (26, 30) for i) identifying each source that provides any of the selected content, ii) determining if any source associated with any of the selected content supports the source resource requirements of any of the compatible applications, and iii) identifying each compatible application having source resource requirements that are satisfied by any source associated with the selected content as a selected application.

5. The apparatus as set forth in claim 1, further including:
a means (18) for i) accessing information associated with user preferences for each compatible application, ii) accessing information associated with previous executions of each compatible application, and iii) accessing one or more graphs for each compatible application, each graph identifying resource requirements associated with the corresponding compatible application; and
a means (26, 30) for determining a qualitative rating for each graph based on at least one of the user preference information, the previous executions information, and information associated with a graph preference by the corresponding compatible application.

6. The apparatus as set forth in claim 4, further including:
a means (30) for selecting the compatible application with the highest qualitative rating to deliver the content.

7. The apparatus as set forth in claim 1 wherein the accessing means is a network (18) interconnecting a plurality of electronic devices.

8. The apparatus as set forth in claim 1 wherein the receiving means is a user interface associated with a sink resource (22).

9. The apparatus as set forth in claim 1 wherein the receiving means is a user interface associated with a source resource (24).

10. The apparatus as set forth in claim 1 wherein the identifying and determining means is a centralized processing resource (30).

11. The apparatus as set forth in claim 1 wherein the identifying and determining means is a de-centralized processing resource (26) associated with a cluster (20).

12. A method for selecting an application to deliver content in a networked consumer environment based on multiple factors, the method comprising:
a) receiving an initial content selection;
b) accessing a list of registered applications for delivering content in the consumer environment; and said method **characterized by** the steps of:
c) accessing information identifying one or more types of content supported by each registered application in the list of registered applications;
d) determining if any registered applications in the list of registered applications support any content types associated with the selected content; and
e) identifying each registered application in the list of registered applications that supports any of the content types associated with the selected content as a compatible application.

13. The method as set forth in claim 12, further including before step b):
identifying zero or more equivalent content references associated with the initial content selection, the combination of the initial content selection and the equivalent content references forming a list of selected content.

14. The method as set forth in claim 13 wherein a qualitative rating between 0 and 100 percent is associated with the initial content selection and each equivalent content reference based on an individual comparison of each of the initial content selection and equivalent content references to one of the initial content selection and equivalent content references having the highest quality.

15. The method as set forth in claim 14 wherein the list of selected content is limited to the initially selected content and equivalent content references with qualitative ratings above a predetermined value.

16. The method as set forth in claim 14, wherein the list of selected content including the qualitative ratings is provided to a user for reduction of one or more items for further application selection processing.

17. The method as set forth in claim 12, further including:
receiving an initial location selection within the consumer environment to which the content is to be delivered;
accessing information identifying the user interface requirements associated with each compatible application;
accessing a list of sink resources for delivering content in the consumer environment;
accessing one or more graphs for each compatible application, each graph identifying sink resource requirements associated with the corresponding compatible application;
determining if any sink resource in the initially selected location supports the user interface requirements and the sink resource requirements of any of the compatible applications; and
identifying each compatible application having sink resource requirements that are satisfied by one or more sink resources in the initially selected location as a selected application.

18. The method as set forth in claim 12, further including:
accessing a list of sources of content associated with the consumer environment;
identifying each source that provides any of the selected content;
accessing one or more graphs for each compatible application, each graph identifying source resource requirements associated with the corresponding compatible application;
determining if any source associated with any of the selected content supports the source resource requirements of any of the compatible applications; and
identifying each compatible application having source resource requirements that are satisfied by any source associated with the selected content as a selected application.

19. The method as set forth in claim 12, further including:
accessing information associated with user preferences for each compatible application;
accessing information associated with previous executions of each compatible application;
accessing one or more graphs for each compatible application, each graph identifying resource requirements associated with the corresponding compatible application; and
determining a qualitative rating for each graph based on at least one of the user preference information, the previous executions information, and information associated with a graph preference by the corresponding compatible application.

20. The method as set forth in claim 19, further including:
selecting the compatible application with the highest qualitative rating to deliver the content.

21. The method as set forth in claim 19, further including:
providing a list of the compatible applications including the qualitative ratings to a user for selection of the application to deliver the content.

22. The method as set forth in claim 21 wherein the list of the compatible applications provided to the user is limited to applications with qualitative ratings above a predetermined value.

23. The method as set forth in claim 12, further including:
accessing information associated with the allocated state of resources within the consumer environment;
accessing one or more graphs for each compatible application, each graph identifying resource requirements associated with the corresponding compatible application;
determining if any available resource supports any of the resource requirements of any of the compatible applications; and
identifying each compatible application having resource requirements that are satisfied by one or more resources within the consumer environment as a selected application.

24. The method as set forth in claim 22 wherein a qualitative rating between 0 and 100 percent is associated with each selected application, the qualitative rating being related to the effect on the consumer environment of selecting that particular application to deliver the content.

25. The method as set forth in claim 24 wherein the effect on the consumer environment is at least associated with the use of scarce resources.

26. The method as set forth in claim 24, further including:
selecting the selected application with the highest qualitative rating to deliver the content.

27. The method as set forth in claim 24, further including:
providing a list of the selected applications including the qualitative ratings to a user for selection of the application to deliver the content.

28. The method as set forth in claim 27 wherein the list of the selected applications provided to the user is limited to applications with qualitative ratings above a predetermined value.

29. The method as set forth in claim 12, further including:
f) receiving an initial location selection within the consumer environment to which the content is to be delivered;
g) accessing information identifying the user interface requirements associated with each first-level compatible application;
h) accessing a list of sink resources for delivering content in the consumer environment;
i) accessing one or more graphs for each first-level compatible application, each graph identifying sink resource requirements associated with the corresponding first-level compatible application;
j) determining if any sink resource in the initially selected location supports the user interface requirements and the sink resource requirements of any of the first-level compatible applications;
k) identifying each first-level compatible application having sink resource requirements that are satisfied by one or more sink resources in the initially selected location as a second-level compatible application;
l) accessing a list of sources of content associated with the consumer environment;
m) identifying each source that provides any of the selected content;
n) accessing one or more graphs for each second-level compatible application, each graph identifying source resource requirements associated with the corresponding second-level compatible application;
o) determining if any source associated with any of the selected content supports the source resource requirements of any of the second-level compatible applications;
p) identifying each second-level compatible application having source resource requirements that are satisfied by any source associated with the selected content as a third-level compatible application;
q) accessing information associated with user preferences for each third-level compatible application;
r) accessing information associated with previous executions of each third-level compatible application;
s) accessing one or more graphs for each third-level compatible application, each graph identifying resource requirements associated with the corresponding third-level compatible application;
t) determining a first qualitative rating for each third level compatible application based on at least one of a content qualitative rating, a user interface qualitative rating, an application qualitative rating, a user qualitative rating, a graph qualitative rating, and a graph mapper qualitative rating;
u) accessing information associated with the allocated state of resources within the consumer environment;
v) determining if any available resource supports any of the resource requirements of any of the third-level compatible applications; and
w) identifying each third-level compatible application having resource requirements that are satisfied by one or more resources within the consumer environment as a selected application.

30. The method as set forth in claim 29, further including:
determining a second qualitative rating for each third level compatible application different from the first qualitative rating and based on at least one of a content qualitative rating, a user interface qualitative rating, an application qualitative rating, a user qualitative rating, a graph qualitative rating, and a graph mapper qualitative rating.

31. The method as set forth in claim 30, further including:
multiplying the first qualitative rating by the second qualitative rating to identify a composite qualitative rating for each selected application.

32. The method as set forth in claim 31, further including:
selecting the selected application with the highest composite qualitative rating to deliver the content.

33. The method as set forth in claim 31, further including:
providing a list of the selected applications including the composite qualitative ratings to a user for selection of the application to deliver the content.

34. The method as set forth in claim 32 wherein the list of the selected applications provided to the user is limited to applications with composite qualitative ratings above a predetermined value.

35. The method as set forth in claim 12, further including:
f) selecting a content source and at least one sink resource for delivering the selected content using at least two of:
an initial location selection within the consumer environment to which the content is to be delivered;
user interface requirements associated with each compatible application; sink resources available for delivering content in the consumer environment;
sink resource requirements associated with the corresponding compatible application;
sink resources in the initially selected location;
sources of content associated with the consumer environment;
sources that provide at least part of the selected content;
source resource requirements associated with the corresponding compatible application;
sources associated with any part of the selected content that supports the source resource requirements of any of the compatible applications;
preferences for each compatible application;
previous executions of each compatible application; and
resource requirements associated with corresponding compatible applications;
g) identifying an optimized allocation of source, application, and sink resources for the users; and
h) delivering the selected content to a sink resource in the selected location.

## Patentansprüche

1. Gerät zum Auswählen einer Anwendung zum Liefern von Inhalten in einer vemetzten Endverbraucherumgebung, basierend auf mehreren Faktoren, das umfasst:
ein Mittel (22, 24, 34 zum Empfangen einer anfänglichen Inhaltsauswahl;
ein Mittel (18) zum i) Zugreifen auf eine Liste registrierter Anwendungen zum Liefern von Inhalten in der Endverbraucherumgebung, **dadurch gekennzeichnet, dass** das Mittel (18) ferner zum ii) Zugreifen auf Informationen ist, die einen oder mehrere Typen von Inhalt identifizieren, die durch eine jede registrierte Anwendung in der Liste registrierter Anwendungen unterstützt werden; und
ein Mittel (26, 30) zum i) Ermitteln, ob irgendwelche registrierten Anwendungen in der Liste registrierter Anwendungen jedwede Inhaltstypen unterstützen, die dem ausgewählten Inhalt zugeordnet sind, und ii) Identifizieren jeder registrierten Anwendung als kompatible Anwendung in der Liste registrierter Anwendungen, die jedwede Inhaltstypen unterstützt, die dem ausgewählten Inhalt zugeordnet sind.

2. Gerät nach Anspruch 1, wobei das Ermittlungs- und Identifizierungsmittel (26, 30) ferner beinhaltet:
ein Mittel (26, 30) zum Identifizieren von null oder mehreren Äquivalenzinhaltsreferenzen, die der anfänglichen Inhaltsauswahl zugeordnet sind, wobei die Kombination der anfänglichen Inhaltsauswahl und der Äquivalenzinhaltsreferenzen eine Liste ausgewählter Inhalte bildet.

3. Gerät nach Anspruch 1, das ferner beinhaltet:
ein Mittel (22, 24, 34) zum Empfangen einer anfänglichen Standortauswahl innerhalb der Endverbraucherumgebung, wohin die Inhalte zu liefern sind;
ein Mittel zum Zugreifen auf Informationen, die die Benutzerschnittstellen-Anforderungen identifizieren, die einer jeden kompatiblen Anwendung zugeordnet sind;
ein Mittel (18) zum i) Zugreifen auf eine Liste von Senkressourcen zum Liefern von Inhalten in die Endverbraucherumgebung und ii) Zugreifen auf einen oder mehrere Graphen für eine jede kompatible Anwendung, wobei jeder Graph Senkressourcen-Anforderungen identifiziert, die der entsprechenden kompatiblen Anwendung zugeordnet sind; und
ein Mittel (26, 30) zum i) Ermitteln, ob irgendeine Senkressource am anfänglich ausgewählten Standort die Benutzerschnittstellen-Anforderungen und die Senkressourcen-Anforderungen irgendeiner der kompatiblen Anwendungen unterstützt und ii) Identifizieren jeder kompatiblen Anwendung als ausgewählte Anwendung, die Senkressourcen-Anforderungen aufweist, die durch eine oder mehrere Senkressourcen am anfänglich ausgewählten Standort erfüllt sind.

4. Gerät nach Anspruch 1, das ferner beinhaltet:
ein Mittel (18) zum i) Zugreifen auf eine Liste von Quellen von Inhalten, die der Endverbraucherumgebung zugeordnet sind, und ii) Zugreifen auf einen oder mehrere Graphen für eine jede kompatible Anwendung, wobei jeder Graph Quellressourcen-Anforderungen identifiziert, die der entsprechenden kompatiblen Anwendung zugeordnet sind; und
ein Mittel (26, 30) zum i) Identifizieren jeder Quelle, die irgendeinen der ausgewählten Inhalte bereitstellt, ii) Ermitteln, ob irgendeine Quelle, die jedwedem der ausgewählten Inhalte zugeordnet ist, die Quellressourcen-Anforderungen irgendeiner der kompatiblen Anwendungen unterstützt, und iii) Identifizieren jeder kompatiblen Anwendung als ausgewählte Anwendung, die Quellressourcen-Anforderungen aufweist, die durch irgendeine Quelle erfüllt sind, die den ausgewählten Inhalten zugeordnet ist.

5. Gerät nach Anspruch 1, das ferner beinhaltet:
ein Mittel (18) zum i) Zugreifen auf Informationen, die Benutzervorlieben für eine jede kompatible Anwendung zugeordnet sind, ii) Zugreifen auf Informationen, die vorherigen Ausführungen einer jeden kompatiblen Anwendung zugeordnet sind, und iii) Zugreifen auf einen oder mehrere Graphen für eine jede kompatible Anwendung, wobei jeder Graph Ressourcen-Anforderungen identifiziert, die der entsprechenden kompatiblen Anwendung zugeordnet sind; und
ein Mittel (26, 30) zum Ermitteln einer qualitative Bewertung für jeden Graphen basierend auf mindestens einer der Benutzervorlieben-Informationen, der Informationen über vorherige Ausführungen und der Informationen, die einer Graphen-Vorliebe durch die entsprechende kompatible Anwendung zugeordnet sind.

6. Gerät nach Anspruch 4, das ferner beinhaltet:
ein Mittel (30) zum Auswählen der kompatiblen Anwendungen mit der höchsten qualitativen Bewertung zum Liefern des Inhalts.

7. Gerät nach Anspruch 1, wobei das Zugriffsmittel ein Netzwerk (18) ist, das mehrere elektronische Einrichtungen miteinander verbindet.

8. Gerät nach Anspruch 1, wobei das Empfangsmittel eine Benutzerschnittstelle ist, die einer Senkressource (22) zugeordnet ist.

9. Gerät nach Anspruch 1, wobei das Empfangsmittel eine Benutzerschnittstelle ist, die einer Quellressource (24) zugeordnet ist.

10. Gerät nach Anspruch 1, wobei das Identifizierungs- und Ermittlungsmittel eine zentralisierte Verarbeitungsressource (30) ist.

11. Gerät nach Anspruch 1, wobei das Identifizierungs- und Ermittlungsmittel eine dezentralisierte Verarbeitungsressource (26) ist, die einer Gruppe (20) zugeordnet ist.

12. Verfahren zum Auswählen einer Anwendung zum Liefern von Inhalten in einer vernetzten Endverbraucherumgebung, basierend auf mehreren Faktoren, wobei das Verfahren umfasst:
a) Empfangen einer anfänglichen Inhaltsauswahl;
b) Zugreifen auf eine Liste registrierter Anwendungen zum Liefern von Inhalten in der Endverbraucherumgebung; und wobei das Verfahren **gekennzeichnet ist durch** die Schritte:
c) Zugreifen auf Informationen, die einen oder mehrere Typen von Inhalten identifizieren, die **durch** eine jede registrierte Anwendung in der Liste registrierter Anwendungen unterstützt werden;
d) Ermitteln, ob irgendwelche registrierten Anwendungen in der Liste registrierter Anwendungen jedwede Inhaltstypen unterstützen, die den ausgewählten Inhalten zugeordnet sind; und
e) Identifizieren jeder registrierten Anwendung als kompatible Anwendung in der Liste registrierter Anwendungen, die jedwede Inhaltstypen unterstützt, die dem ausgewählten Inhalt zugeordnet sind.

13. Verfahren nach Anspruch 12, das vor Schritt b) ferner beinhaltet:
Identifizieren von null oder mehreren Äquivalenzinhaltsreferenzen, die der anfänglichen Inhaltsauswahl zugeordnet sind, wobei die Kombination der anfänglichen Inhaltsauswahl und der Äquivalenzinhaltsreferenzen eine Liste ausgewählter Inhalte bildet.

14. Verfahren nach Anspruch 13, wobei basierend auf einem individuellen Vergleich jeder der anfänglichen Inhaltsauswahl und der Äquivalenzinhaltsreferenzen mit einer der anfänglichen Inhaltsauswahl und der Äquivalenzinhaltsreferenzen, die die höchste Qualität aufweist, der anfänglichen Inhaltsauswahl und jeder Äquivalenzinhaltsreferenz eine qualitative Bewertung zwischen 0 und 100 Prozent zugeordnet ist.

15. Verfahren nach Anspruch 14, wobei die Liste ausgewählter Inhalte auf den anfänglich ausgewählten Inhalt und Äquivalenzinhaltsreferenzen mit qualitativen Bewertungen oberhalb eines vorgegebenen Wertes begrenzt ist.

16. Verfahren nach Anspruch 14, wobei die Liste ausgewählter Inhalte einschließlich der qualitativen Bewertungen einem Benutzer zur Verringerung um ein oder mehrere Positionen zur weiteren Anwendungsauswahlverarbeitung bereitgestellt wird.

17. Verfahren nach Anspruch 12, das ferner beinhaltet:
Empfangen einer anfänglichen Standortauswahl innerhalb der Endverbraucherumgebung, wohin die Inhalte zu liefern sind;
Zugreifen auf Informationen, die die Benutzerschnittstellen-Anforderungen identifizieren, die einer jeden kompatiblen Anwendung zugeordnet sind;
Zugreifen auf eine Liste von Senkressourcen zum Liefern von Inhalten in der Endverbraucherumgebung;
Zugreifen auf einen oder mehrere Graphen für eine jede kompatible Anwendung, wobei jeder Graph Senkressourcen-Anforderungen identifiziert, die der entsprechenden kompatiblen Anwendung zugeordnet sind;
Ermitteln, ob irgendeine Senkressource am anfänglich ausgewählten Standort die Benutzerschnittstellen-Anforderungen und die Senkressourcen-Anforderungen irgendeiner der kompatiblen Anwendungen unterstützt; und
Identifizieren jeder kompatiblen Anwendung als ausgewählte Anwendung, die Senkressourcen-Anforderungen aufweist, die durch eine oder mehrere Senkressourcen am anfänglich ausgewählten Standort erfüllt sind.

18. Verfahren nach Anspruch 12, das ferner beinhaltet:
Zugreifen auf eine Liste von Quellen von Inhalten, die der Endverbraucherumgebung zugeordnet sind;
Identifizieren jeder Quelle, die irgendeinen der ausgewählten Inhalte bereitstellt;
Zugreifen auf einen oder mehrere Graphen für eine jede kompatible Anwendung, wobei jeder Graph Quellressourcen-Anforderungen identifiziert, die der entsprechenden kompatiblen Anwendung zugeordnet sind;
Ermitteln, ob irgendeine Quelle, die jedwedem der ausgewählten Inhalte zugeordnet ist, die Quellressourcen-Anforderungen irgendeiner der kompatiblen Anwendungen unterstützt; und
Identifizieren jeder kompatiblen Anwendung als ausgewählte Anwendung, die Quellressourcen-Anforderungen aufweist, die durch irgendeine Quelle erfüllt sind, die den ausgewählten Inhalten zugeordnet ist.

19. Verfahren nach Anspruch 12, das ferner beinhaltet:
Zugreifen auf Informationen, die Benutzervorlieben für eine jede kompatible Anwendung zugeordnet sind;
Zugreifen auf Informationen, die vorherigen Ausführungen einer jeden kompatiblen Anwendung zugeordnet sind;
Zugreifen auf einen oder mehrere Graphen für eine jede kompatible Anwendung, wobei jeder Graph Ressourcen-Anforderungen identifiziert, die der entsprechenden kompatiblen Anwendung zugeordnet sind; und
Ermitteln einer qualitative Bewertung für jeden Graphen basierend auf mindestens einer der Benutzervorlieben-Informationen, der Informationen über vorherige Ausführungen und der Informationen, die einer Graphen-Vorliebe durch die entsprechende kompatible Anwendung zugeordnet sind.

20. Verfahren nach Anspruch 19, das ferner beinhaltet:
Auswählen der kompatiblen Anwendung mit der höchsten qualitativen Bewertung zum Liefern des Inhalts.

21. Verfahren nach Anspruch 19, das ferner beinhaltet:
Bereitstellen einer Liste der kompatiblen Anwendungen einschließlich der qualitativen Bewertungen gegenüber einem Benutzer zur Auswahl der Anwendung zum Liefern des Inhalts.

22. Verfahren nach Anspruch 21, wobei die Liste der kompatiblen Anwendungen, die dem Benutzer bereitgestellt ist, auf Anwendungen mit qualitativen Bewertungen oberhalb eines vorgegebenen Wertes begrenzt ist.

23. Verfahren nach Anspruch 12, das ferner beinhaltet:
Zugreifen auf Informationen, die dem zugeteilten Status von Ressourcen innerhalb der Endverbraucherumgebung zugeordnet sind;
Zugreifen auf einen oder mehrere Graphen für eine jede kompatible Anwendung, wobei jeder Graph Ressourcen-Anforderungen identifiziert, die der entsprechenden kompatiblen Anwendung zugeordnet sind;
Ermitteln, ob irgendeine verfügbare Ressource jedwede der Ressourcen-Anforderungen irgendeiner der kompatiblen Anwendungen unterstützt; und
Identifizieren jeder kompatiblen Anwendung als ausgewählte Anwendung, die Ressourcen-Anforderungen aufweist, die durch eine oder mehrere Ressourcen innerhalb der Endverbraucherumgebung erfüllt sind.

24. Verfahren nach Anspruch 22, wobei jeder ausgewählten Anwendung eine qualitative Bewertung zwischen 0 und 100 Prozent zugeordnet wird, wobei die qualitative Bewertung auf die Wirkung des Auswählens jener bestimmten Anwendung zum Liefern des Inhalts auf die Endverbraucherumgebung bezogen ist.

25. Verfahren nach Anspruch 24, wobei die Wirkung auf die Endverbraucherumgebung mindestens der Verwendung knapper Ressourcen zugeordnet ist.

26. Verfahren nach Anspruch 24, das ferner beinhaltet:
Auswählen der ausgewählten Anwendung mit der höchsten qualitativen Bewertung zum Liefern des Inhalts.

27. Verfahren nach Anspruch 24, das ferner beinhaltet:
Bereitstellen einer Liste der ausgewählten Anwendungen einschließlich der qualitativen Bewertungen gegenüber einem Benutzer zur Auswahl der Anwendung zum Liefern des Inhalts.

28. Verfahren nach Anspruch 27, wobei die Liste der ausgewählten Anwendungen, die dem Benutzer bereitgestellt ist, auf Anwendungen mit qualitativen Bewertungen oberhalb eines vorgegebenen Wertes begrenzt ist.

29. Verfahren nach Anspruch 12, das ferner beinhaltet:
f) Empfangen einer anfänglichen Standortauswahl innerhalb der Endverbraucherumgebung, wohin die Inhalte zu liefern sind;
g) Zugreifen auf Informationen, die die Benutzerschnittstellen-Anforderungen identifizieren, die einer jeden kompatiblen Anwendung erster Ebene zugeordnet sind;
h) Zugreifen auf eine Liste von Senkressourcen zum Liefern von Inhalten in der Endverbraucherumgebung;
i) Zugreifen auf einen oder mehrere Graphen für eine jede kompatible Anwendung erster Ebene, wobei jeder Graph Senkressourcen-Anforderungen identifiziert, die der entsprechenden kompatiblen Anwendung erster Ebene zugeordnet sind;
j) Ermitteln, ob irgendeine Senkressource am anfänglich ausgewählten Standort die Benutzerschnittstellen-Anforderungen und die Senkressourcen-Anforderungen irgendeiner der kompatiblen Anwendungen erster Ebene unterstützt;
k) Identifizieren jeder kompatiblen Anwendung erster Ebene als kompatible Anwendung zweiter Ebene, die Senkressourcen-Anforderungen aufweist, die durch eine oder mehrere Senkressourcen am anfänglich ausgewählten Standort erfüllt sind.
l) Zugreifen auf eine Liste von Quellen von Inhalten, die der Endverbraucherumgebung zugeordnet sind;
m) Identifizieren jeder Quelle, die irgendeinen der ausgewählten Inhalte bereitstellt;
n) Zugreifen auf einen oder mehrere Graphen für eine jede kompatible Anwendung zweiter Ebene, wobei jeder Graph Quellressourcen-Anforderungen identifiziert, die der entsprechenden kompatiblen Anwendung zweiter Ebene zugeordnet sind;
o) Ermitteln, ob irgendeine Quelle, die jedwedem der ausgewählten Inhalte zugeordnet ist, die Quellressourcen-Anforderungen irgendeiner der kompatiblen Anwendungen zweiter Ebene unterstützt;
p) Identifizieren jeder kompatiblen Anwendung zweiter Ebene als kompatible Anwendung dritter Ebene, die Quellressourcen-Anforderungen aufweist, die durch irgendeine Quelle erfüllt sind, die den ausgewählten Inhalten zugeordnet ist.
q) Zugreifen auf Informationen, die Benutzervorlieben für eine jede kompatible Anwendung dritter Ebene zugeordnet sind,
r) Zugreifen auf Informationen, die vorherigen Ausführungen einer jeden kompatiblen Anwendung dritter Ebene zugeordnet sind;
s) Zugreifen auf einen oder mehrere Graphen für eine jede kompatible Anwendung dritter Ebene, wobei jeder Graph Ressourcen-Anforderungen identifiziert, die der entsprechenden kompatiblen Anwendung dritter Ebene zugeordnet sind;
t) Ermitteln einer ersten qualitativen Bewertung für eine jede kompatible Anwendung dritter Ebene basierend auf mindestens einer einer qualitativen Inhaltsbewertung, einer qualitativen Benutzerschnittstellenbewertung, einer qualitativen Anwendungsbewertung, einer qualitativen Benutzerbewertung, einer qualitativen Graphenbewertung und einer qualitativen Graphenabbilderbewertung;
u) Zugreifen auf Informationen, die dem zugeteilten Status von Ressourcen innerhalb der Endverbraucherumgebung zugeordnet sind;
v) Ermitteln, ob irgendeine verfügbare Ressource jedwede der Ressourcen-Anforderungen irgendeiner der kompatiblen Anwendungen dritter Ebene unterstützt; und
w) Identifizieren jeder kompatiblen Anwendung dritter Ebene als ausgewählte Anwendung, die Ressourcen-Anforderungen aufweist, die durch eine oder mehrere Ressourcen innerhalb der Endverbraucherumgebung erfüllt sind.

30. Verfahren nach Anspruch 29, das ferner beinhaltet:
Ermitteln einer zweiten qualitativen Bewertung für eine jede kompatible Anwendung dritter Ebene, die von der ersten qualitativen Bewertung verschieden ist und auf mindestens einer einer qualitativen Inhaltsbewertung, einer qualitativen Benutzerschnittstellenbewertung, einer qualitativen Anwendungsbewertung, einer qualitativen Benutzerbewertung, einer qualitativen Graphenbewertung und einer qualitativen Graphenabbilderbewertung basiert.

31. Verfahren nach Anspruch 30, das ferner beinhaltet:
Multiplizieren der ersten qualitativen Bewertung mit der zweiten qualitativen Bewertung, um eine zusammengesetzte qualitative Bewertung für eine jede ausgewählte Anwendung zu identifizieren.

32. Verfahren nach Anspruch 31, das ferner beinhaltet:
Auswählen der ausgewählten Anwendung mit der höchsten zusammengesetzten qualitativen Bewertung zum Liefern des Inhalts.

33. Verfahren nach Anspruch 31, das ferner beinhaltet:
Bereitstellen einer Liste der ausgewählten Anwendungen einschließlich der zusammengesetzten qualitativen Bewertungen gegenüber einem Benutzer zur Auswahl der Anwendung zum Liefern des Inhalts.

34. Verfahren nach Anspruch 33, wobei die Liste der ausgewählten Anwendungen, die dem Benutzer bereitgestellt ist, auf Anwendungen mit zusammengesetzten qualitativen Bewertungen oberhalb eines vorgegebenen Wertes begrenzt ist.

35. Verfahren nach Anspruch 12, das ferner beinhaltet:
f) Auswählen einer Inhaltsquelle und mindestens einer Senkressource zum Liefern des ausgewählten Inhalts mithilfe von mindestens zweien aus:
einer anfänglichen Standortauswahl innerhalb der Endverbraucherumgebung, wohin die Inhalte zu liefern sind;
Benutzerschnittstellen-Anforderungen, die einer jeden kompatiblen Anwendung zugeordnet sind;
verfügbaren Senkressourcen zum Liefern von Inhalten in der Endverbraucherumgebung;
Senkressourcen-Anforderungen, die der entsprechenden kompatiblen Anwendung zugeordnet sind;
Senkressourcen am anfänglich ausgewählten Standort;
Quellen von Inhalten, die der Endverbraucherumgebung zugeordnet sind;
Quellen, die mindestens einen Anteil des ausgewählten Inhalts bereitstellen;
Quellressourcen-Anforderungen, die der entsprechenden kompatiblen Anwendung zugeordnet sind;
Quellen, die jedwedem Teil des ausgewählten Inhalts zugeordnet sind, die Quellressourcen-Anforderungen irgendeiner der kompatiblen Anwendungen unterstützen;
Vorlieben für jede kompatible Anwendung;
vorherigen Ausführungen jeder kompatiblen Anwendung; und
Ressourcen-Anforderungen, die entsprechenden kompatiblen Anwendungen zugeordnet sind;
g) Identifizieren einer optimierten Zuteilung von Quell-, Anwendungs- und Senkressourcen für die Benutzer und
h) Liefern des ausgewählten Inhalts an eine Senkressource am ausgewählten Standort.

## Revendications

1. Appareil de sélection d'une application pour fournir du contenu dans un environnement grand public en réseau sur la base de facteurs multiples, comprenant:
des moyens (22, 24, 34) pour recevoir une sélection initiale de contenu;
des moyens (18) pour i) accéder à une liste d'applications enregistrées pour fournir du contenu dans un environnement grand public, **caractérisé en ce que** les moyens (18) sont de plus conçus pour ii) accéder à des informations identifiant un ou plusieurs types de contenu supportés par chaque application enregistrée dans la liste d'applications enregistrées; et
des moyens (26, 30) pour i) déterminer si une quelconque des applications enregistrées dans la liste d'applications enregistrées supporte un type quelconque de contenu associé au contenu sélectionné, et ii) identifier chaque application enregistrée dans la liste d'applications enregistrées qui supporte n'importe lequel des types de contenu associés au contenu sélectionné en tant qu'application compatible.

2. Appareil selon la revendication 1, les moyens de détermination et d'identification (26, 30) incluant de plus:
des moyens (26, 30) pour identifier zéro référence de contenu équivalent ou plus associée(s) à la sélection initiale de contenu, la combinaison de la sélection initiale de contenu et des références de contenu équivalent formant une liste de contenu sélectionné.

3. Appareil selon la revendication 1, incluant de plus:
des moyens (22, 24, 34) pour recevoir une sélection initiale d'emplacement dans l'environnement grand public auquel le contenu doit être fourni;
des moyens pour accéder à des informations identifiant les besoins en interface utilisateur associés à chaque application compatible;
des moyens (18) pour i) accéder à une liste de ressources de récepteur pour fournir du contenu dans l'environnement grand public et ii) accéder à un ou plusieurs graphes pour chaque application compatible, chaque graphe identifiant des besoins en ressources de récepteur associés à l'application compatible correspondante; et
des moyens (26, 30) pour i) déterminer si une ressource de récepteur quelconque dans l'emplacement initialement sélectionné supporte les besoins en interface utilisateur et les besoins en ressources de récepteur de n'importe laquelle des applications compatibles et ii) identifier chaque application compatible ayant des besoins en ressources de récepteur qui sont satisfaits par une ou plusieurs ressources de récepteur dans l'emplacement initialement sélectionné en tant qu'application sélectionnée.

4. Appareil selon la revendication 1, incluant de plus:
des moyens (18) pour i) accéder à une liste de sources de contenu associées à l'environnement grand public et ii) accéder à un ou plusieurs graphes pour chaque application compatible, chaque graphe identifiant des besoins en ressources de source associés à l'application compatible correspondante; et
des moyens (26, 30) pour i) identifier chaque source qui fournit n'importe lequel du contenu sélectionné, ii) déterminer si une source quelconque associée à n'importe lequel du contenu sélectionné supporte les besoins en ressources de source de n'importe laquelle des applications compatibles, et iii) identifier chaque application compatible ayant des besoins en ressources de source qui sont satisfaits par une source quelconque associée au contenu sélectionné en tant qu'application sélectionnée.

5. Appareil selon la revendication 1, incluant de plus:
des moyens (18) pour i) accéder à des informations associées aux préférences d'utilisateur pour chaque application compatible, ii) accéder à des informations associées à des exécutions précédentes de chaque application compatible, et iii) accéder à un ou plusieurs graphes pour chaque application compatible, chaque graphe identifiant des besoins en ressources associés à l'application compatible correspondante; et
des moyens (26, 30) pour déterminer une note qualitative pour chaque graphe sur la base d'au moins une parmi des informations de préférence d'utilisateur, des informations d'exécutions précédentes, et des informations associées à une préférence de graphe par l'application compatible correspondante.

6. Appareil selon la revendication 4, comprenant de plus:
des moyens (30) pour sélectionner l'application compatible ayant la note qualitative la plus haute pour fournir le contenu.

7. Appareil selon la revendication 1, dans lequel les moyens d'accès sont un réseau (18) interconnectant plusieurs dispositifs électroniques.

8. Appareil selon la revendication 1, dans lequel les moyens de réception sont une interface utilisateur associée à une ressource de récepteur (22).

9. Appareil selon la revendication 1, dans lesquels les moyens de réception sont une interface d'utilisateur associée à une ressource de source (24).

10. Appareil selon la revendication 1, dans lequel les moyens d'identification et de détermination sont une ressource de traitement centralisée (30).

11. Appareil selon la revendication 1, dans lequel les moyens d'identification et de détermination sont une ressource de traitement décentralisée (26) associée à un groupe (20).

12. Procédé de sélection d'une application pour fournir du contenu dans un environnement grand public en réseau sur la base de facteurs multiples, le procédé comprenant:
a) la réception d'une sélection initiale de contenu;
b) l'accès à une liste d'applications enregistrées pour fournir de contenu dans l'environnement grand public; et ledit procédé étant **caractérisé par** les étapes suivantes:
c) accès à des informations identifiant un ou plusieurs types de contenu supporté par chaque application enregistrée dans la liste d'applications enregistrées;
d) détermination du fait qu'aucune application enregistrée dans la liste d'applications enregistrées ne supporte aucun type de contenu associé au contenu sélectionné; et
e) identification de chaque application enregistrée dans la liste d'applications enregistrées qui supportent n'importe lequel des types de contenu associés au contenu sélectionné en tant qu'application compatible.

13. Procédé selon la revendication 12, incluant de plus avant l'étape b):
l'identification de zéro référence de contenu équivalent ou plus associée(s) à la sélection initiale de contenu, la combinaison de la sélection initiale de contenu et des références de contenu équivalent formant une liste de contenu sélectionné.

14. Procédé selon la revendication 13, dans lequel une note qualitative entre 0 et 100 pour cent est associée à la sélection initiale de contenu et chaque référence de contenu équivalent basée sur une comparaison individuelle de chacune des références de sélection initiale de contenu et de contenu équivalent à une des références de sélection initiale de contenu et de contenu équivalent ayant la qualité la plus haute.

15. Procédé selon la revendication 14, dans lequel la liste de contenu sélectionné est limitée aux références de contenu initialement sélectionné et de contenu équivalent avec des notes qualitatives au-dessus d'une valeur prédéterminée.

16. Procédé selon la revendication 14, dans lequel la liste de contenu sélectionné incluant les notes qualitatives est fournie à un utilisateur pour réduire un ou plusieurs éléments pour traitement additionnel de sélection d'application.

17. Procédé selon la revendication 12, incluant de plus:
la réception d'une sélection initiale d'emplacement dans l'environnement grand public auquel le contenu doit être fourni;
l'accès à des informations identifiant les besoins en interface d'utilisateur associés à chaque application compatible;
l'accès à une liste de ressources de récepteur pour fournir du contenu dans l'environnement grand public;
l'accès à un ou plusieurs graphes pour chaque application compatible, chaque graphe identifiant des besoins en ressources de récepteur associés à l'application compatible correspondante;
la détermination du fait qu'une ressource de récepteur quelconque dans l'emplacement sélectionné initialement supporte les besoins en interface d'utilisateur et les besoins de ressources de récepteur de n'importe laquelle des applications compatibles; et
l'identification de chaque application compatible ayant des besoins en ressources de récepteur qui sont satisfaits par une ou plusieurs ressources de récepteur dans l'emplacement sélectionné initialement en tant qu'application sélectionnée.

18. Procédé selon la revendication 12, incluant de plus:
l'accès à une liste de sources de contenu associées à l'environnement grand public;
l'identification de chaque source qui fournit n'importe lequel du contenu sélectionné;
l'accès à un ou plusieurs graphes pour chaque application compatible, chaque graphe identifiant des besoins en ressources de source associés à l'application compatible correspondante;
la détermination du fait qu'une source quelconque associée à n'importe lequel du contenu sélectionné supporte les besoins en ressources de source de n'importe laquelle des applications compatibles; et
l'identification de chaque application compatible ayant des besoins en ressources de source qui sont satisfaits par une source quelconque associée au contenu sélectionné en tant qu'application sélectionnée.

19. Procédé selon la revendication 12, incluant de plus:
l'accès à des informations associées à des préférences d'utilisateur pour chaque application compatible;
l'accès à des informations associées à des exécutions précédentes de chaque application compatible;
l'accès à un ou plusieurs graphes pour chaque application compatible, chaque graphe identifiant des besoins en ressources associés à l'application compatible correspondante; et
la détermination d'une note qualitative pour chaque graphe sur la base d'au moins une parmi des informations de préférence d'utilisateur, des informations d'exécutions précédentes, et des informations associées à une préférence de graphe par l'application compatible correspondante.

20. Procédé selon la revendication 19, incluant de plus:
la sélection de l'application compatible ayant la note qualitative la plus haute pour fournir le contenu.

21. Procédé selon la revendication 19, incluant de plus:
la fourniture à un utilisateur d'une liste d'applications compatibles incluant les notes qualitatives pour la sélection de l'application pour fournir le contenu.

22. Procédé selon la revendication 21, dans lequel la liste d'applications compatibles fournies à l'utilisateur est limitée aux applications ayant des notes qualitatives au-dessus d'une valeur prédéterminée.

23. Procédé selon la revendication 12, incluant de plus:
l'accès à des informations associées à l'état alloué de ressources dans l'environnement grand public;
l'accès à un ou plusieurs graphes pour chaque application compatible, chaque graphe identifiant des besoins en ressources associés à l'application compatible correspondante;
la détermination de ce qu'une ressource disponible quelconque supporte n'importe lequel des besoins en ressources de n'importe laquelle des applications compatibles; et
l'identification de chaque application compatible ayant des besoins en ressources qui sont satisfaits par une ou plusieurs ressources dans l'environnement grand public en tant qu'application sélectionnée.

24. Procédé selon la revendication 22, dans lequel une note qualitative entre 0 et 100 pourcent est associée à chaque application sélectionnée, la note qualitative étant liée à l'effet sur l'environnement grand public de la sélection de cette application particulière pour fournir le contenu.

25. Procédé selon la revendication 24, dans lequel l'effet sur l'environnement grand public est au moins associé avec l'utilisation de ressources rares.

26. Procédé selon la revendication 24, incluant de plus:
la sélection de l'application sélectionnée avec la note qualitative la plus haute pour fournir le contenu.

27. Procédé selon la revendication 24, incluant de plus:
la fourniture à un utilisateur d'une liste d'applications sélectionnées incluant les notes qualitatives pour sélection de l'application pour fournir le contenu.

28. Procédé selon la revendication 27, dans lequel la liste d'applications sélectionnées fournies à l'utilisateur est limitée aux applications avec des notes qualitatives au-dessus d'une valeur prédéterminée.

29. Procédé selon la revendication 12, incluant de plus:
f) la réception d'une sélection initiale d'emplacement dans l'environnement grand public auquel le contenu doit être fourni;
g) l'accès à des informations identifiant les besoins en interface utilisateur associés à chaque application compatible de premier niveau;
h) l'accès à une liste de ressources de récepteur pour fournir le contenu dans un environnement grand public;
i) l'accès à un ou plusieurs graphes pour chaque application compatible de premier niveau, chaque graphe identifiant des besoins en ressources de récepteur associés à l'application compatible de premier niveau correspondante;
j) la détermination de ce qu'une ressource de récepteur quelconque de l'emplacement sélectionné initialement supporte les besoins en interface utilisateur et les besoins en ressources de récepteur de n'importe laquelle des applications compatibles de premier niveau;
k) l'identification de chaque application compatible de premier niveau ayant des besoins en ressources de récepteur qui sont satisfaits par une ou plusieurs ressources de récepteur dans l'emplacement sélectionné initialement en tant qu'application compatible de deuxième niveau;
l) l'accès à une liste de sources de contenu associées à l'environnement grand public;
m) l'identification de chaque source qui fournit n'importe lequel du contenu sélectionné;
n) l'accès à un ou plusieurs graphes pour chaque application compatible de deuxième niveau, chaque graphe identifiant des besoins en ressources de source associés à l'application compatible de deuxième niveau correspondante;
o) la détermination de ce qu'une source quelconque associée avec n'importe lequel du contenu sélectionné supporte les besoins en ressources de source de n'importe laquelle des applications compatibles de deuxième niveau;
p) l'identification de chaque application compatible de deuxième niveau ayant des besoins en ressources de source qui sont satisfaits par une source quelconque associée au contenu sélectionné comme application compatible de troisième niveau;
q) l'accès aux informations associées aux préférences d'utilisateur pour chaque application compatible de troisième niveau;
r) l'accès à des informations associées à des exécutions précédentes de chaque application compatible de troisième niveau;
s) l'accès à un ou plusieurs graphes pour chaque application compatible de troisième niveau, chaque graphe identifiant des besoins en ressources associés à l'application compatible de troisième niveau correspondante;
t) la détermination d'une première note qualitative pour chaque application compatible de troisième niveau sur la base d'au moins une parmi une note qualitative de contenu, une note qualitative d'interface utilisateur, une note qualitative d'application, une note qualitative d'utilisateur, une note qualitative de graphe, et une note qualitative de correspondance de graphe;
u) l'accès à des informations associées à l'état alloué de ressources dans l'environnement grand public;
v) la détermination de ce qu'une ressource quelconque disponible supporte n'importe lequel des besoins en ressources de n'importe laquelle des applications compatibles de troisième niveau; et
w) l'identification de chaque application compatible de troisième niveau ayant des besoins en ressources qui sont satisfaits par une ou plusieurs ressources dans l'environnement grand public en tant qu'application sélectionnée.

30. Procédé selon la revendication 29, incluant de plus:
la détermination d'une deuxième note qualitative pour chaque application compatible de troisième niveau différente de la première note qualitative et basée sur au moins une parmi une note qualitative de contenu, une note qualitative d'interface utilisateur, une note qualitative d'application, une note qualitative d'utilisateur, une note qualitative de graphe, et une note qualitative de correspondance de graphe.

31. Procédé selon la revendication 30, incluant de plus:
la multiplication de la première note qualitative par la deuxième note qualitative pour identifier une note qualitative combinée pour chaque application sélectionnée.

32. Procédé selon la revendication 31, incluant de plus:
la sélection de l'application sélectionnée ayant la note qualitative combinée la plus haute pour fournir le contenu.

33. Procédé selon la revendication 31, incluant de plus:
la fourniture à un utilisateur d'une liste d'applications sélectionnées incluant les notes qualitatives combinées pour sélection de l'application pour fournir le contenu.

34. Procédé selon la revendication 32 dans lequel la liste d'applications sélectionnées fournie à l'utilisateur est limitée aux applications ayant des notes qualitatives combinées au-dessus d'une valeur prédéterminée.

35. Procédé selon la revendication 12, incluant de plus:
f) la sélection d'une source de contenu et d'au moins une ressource de récepteur pour fournir le contenu sélectionné en utilisant au moins deux éléments parmi:
une sélection initiale d'emplacement dans l'environnement grand public auquel le contenu doit être fourni;
des besoins en interface utilisateur associés à chaque application compatible; des ressources de récepteur disponibles pour fournir du contenu dans un environnement grand public;
des besoins en ressources de récepteur associés à l'application compatible correspondante;
des besoins de récepteur dans l'emplacement sélectionné initialement;
des sources de contenu associées à l'environnement grand public;
des sources qui fournissent au moins une partie du contenu sélectionné;
des besoins en ressources de source associés à l'application compatible correspondante;
des sources associées à une partie quelconque du contenu sélectionné qui supporte les besoins en ressources de source de n'importe laquelle des applications compatibles;
des préférences pour chaque application compatible;
des exécutions précédentes de chaque application compatible; et
des besoins en ressources associés aux applications compatibles correspondantes;
g) l'identification d'une allocation optimisée de ressources de source, d'application, et de récepteur pour les utilisateurs; et
h) la fourniture du contenu sélectionné à une ressource de récepteur dans l'emplacement sélectionné.
